## Europäisches Patentamt
## European Patent Office
## Office européen des brevets

(11) Veröffentlichungsnummer: **0 115 788**
**B2**

(12) **NEUE EUROPÄISCHE PATENTSCHRIFT**

(45) Veröffentlichungstag der neuen Patentschrift:
**29.08.90**

(51) Int. Cl.⁵: **H 02 K 9/02, H 02 K 7/14, B 26 D 1/14**

(21) Anmeldenummer: **84100276.9**

(22) Anmeldetag: **12.01.84**

(54) Vorrichtung zur Kühlung des elektrischen Antriebsmotors für das Kreismesser einer Aufschnitt-Schneidemaschine.

(30) Priorität: **10.02.83 DE 3304611**

(43) Veröffentlichungstag der Anmeldung:
**15.08.84 Patentblatt 84/33**

(45) Bekanntmachung des Hinweises auf die Patenterteilung:
**23.07.86 Patenblatt 86/30**

(45) Bekanntmachung des Hinweises auf die Entscheidung u¨ber den Einspruch:
**29.08.90 Patentblatt 90/35**

(84) Benannte Vertragsstaaten:
**AT BE DE FR GB IT NL SE**

(56) Entgegenhaltungen:
CH-A-51 049 9    DE-C- 865 523
DE-A-2 929 713  DE-C- 940 141
DE-A-3 102 898  DE-U-1 741 293
DE-B-1 183 645  DE-U-1 769 948
DE-C- 839 674

Die Akte enthält technische Angaben, die nach dem Eingang der Anmeldung eingereicht wurden und die nicht in dieser Patentschrift enthalten sind.

(73) Patentinhaber: **Bizerba-Werke Wilhelm Kraut GmbH & Co. KG.**
**Wilhelm-Kraut-Strasse 41**
**D-7460 Balingen 1 (DE)**

(72) Erfinder: **Maurer, Albrecht**
**Nagolder Strasse 8**
**D-7460 Balingen 1 (DE)**
Erfinder: **Thäsler, Manfred**
**Am Schlichtebach 169**
**D-7460 Balingen 1 (DE)**

(74) Vertreter: **Hoeger, Stellrecht & Partner**
**Uhlandstrasse 14 c**
**D-7000 Stuttgart 1 (DE)**

Courier Press, Leamington Spa, England.

## Beschreibung

Die Erfindung betrifft eine Vorrichtung zur Kühlung des elektrischen Antriebsmotors für das Kreismesser einer Aufschnitt-Schneidemaschine nach dem Oberbegriff des Patentanspruchs 1.

Aufschnitt-Schneidemaschinen de hier in Rede stehenden Art dienen vor allem zum Schneiden von Lebensmitteln, insbesondere Fleisch, Wurst, Käse und dgl. Bei diesen Maschinen hat die Erwärmung der Oberflächen des Maschinengehäuses und die dadurch entstehende Wärmeübertragung auf die zu schneidenden oder geschnittenen Güter, z.B. Wurtscheiben, nachteilige Auswirkungen. Aussehen und Geschmack des Schneidgutes werden beeinträchtigt, die Haltbarkeitszeit wird reduziert, usw.

Aus der DE—U—1 769 948 ist ein Küchengerät mit einem einen Elektromotor umschließenden Antriebssockel bekannt. Dabei übernimmt ein rohrförmiges Mantelstück die Aufgabe, den Elektromotorteilen die benötigte Kühlluft zuzuführen und bildet somit eine Motorgehäuse. Ein eigentliches Kühlluftgehäuse fehlt bei diesem Gerät. Durch die vom Motor abströmende, erwärmte Luft werden beträchtliche Bereiche des Gerätegehäuses zwangsläufig erwärmt, weil insbesondere auch ein Deckel die Warmluft vom Gerätegehäuse nicht abschirmen kann. Da Bei Aufschnitt-Schneidemaschinen das Gehäuse in de Regel aus Metall besteht, könnte somit bei einer Ausbildung ähnlich der vorgenannten Druckschrift ohne weiteres eine Wärmeleitung bis zu denjenigen Stellen des Gehäuses stattfinden, die mit dem Schneidgut in Berührung kommen.

Est ist Aufgabe der Erfindung, eine gattungsgemäße Kühlvorrichtung zu schaffen, bei der die geschilderten Mängel behoben sind, die also insbesondere eine von Nahrungsmittelresten, Feuchtigkeit, Spülwasser und dgl. freie Kühlluft dem Antriebsmotor zuleitet und die vom Motor abfließende, erwärmte Kühlluft so weg führt, daß sie mit dem Schneidgut nicht in Berührung kommt.

Die Aufabe wird erfindungsgemäß durch die kennzeichnenden Merkmale des Patentanspruchs 1 gelöst.

Der Erfindungsgedanke besteht also darin, das Leitungssystem für die Kühlluft des Antriebsmotors so zu gestalten, daß die strömende Kühlluft nirgendwo mit der Bedienungsseite der Aufschnitt-Schneidemaschine und insbesondere dem Schneidgut in Kontakt tritt.

Die nachstehende Beschreibung einer bevorzugten Ausführungsform der Erfindung dient im Zusammenhang mit beiliegender Zeichnung der weiteren Erläuterung. Es zeigen:

Fig. 1 eine Teilschnittansicht einer Aufschnitt-Schneidemaschine und

Fig. 2 eine Schnittansicht in Richtung des Pfeiles R in Fig. 1.

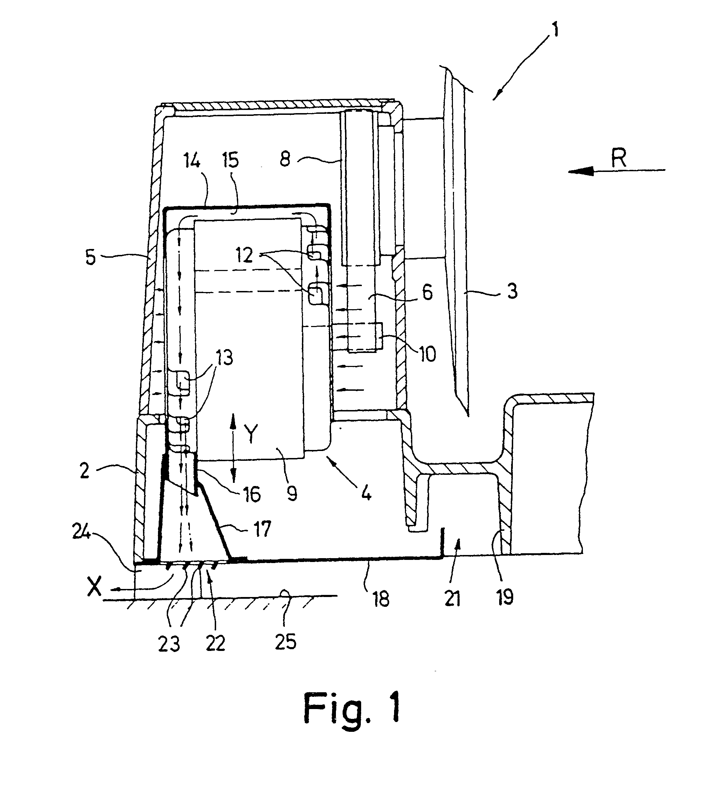

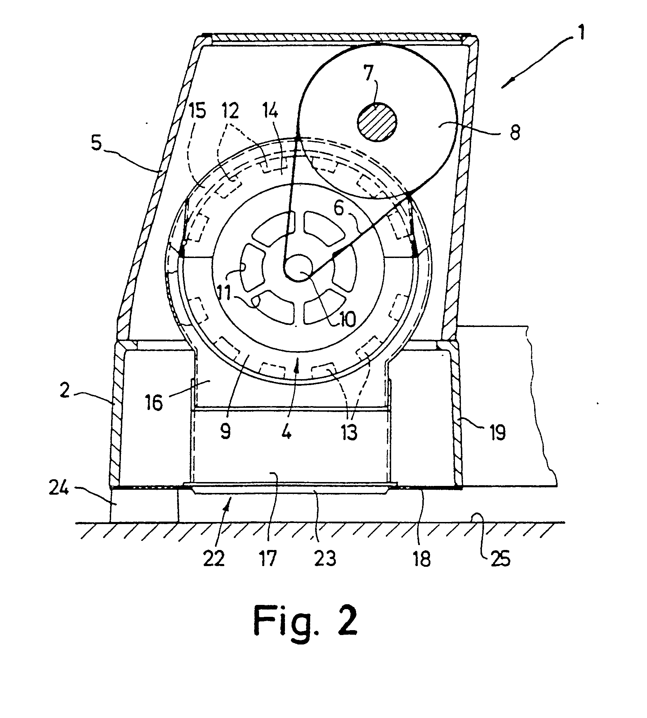

Die auf der Zeichnung nur mit ihren für die Erfindung wesentlichen Teilen dargestellte Aufschnitt-Schneidemaschine 1 umfaßt ein Maschinegehäuse 2 und eine drehbar an diesem gelagertes Kreismesser 3, mit dem in bekannter Weise von einem z.B. durch einen Schlitten zugeführten Schneidgut Scheiben abgeschnitten werden. Das Kreismesser 3 wird von einem elektrischen Antriebsmotor 4, der durch ein Teil 5 des Maschinengehäuses praktisch vollständig umschlossen ist, über einen Riemen 6 und eine mit der Welle 7 (Fig. 2) des Messers 3 drehschlüssig verbundene Scheibe 8 angetrieben. Stator und Rotor des Motors 4 sind in bekannter Weise von einem Motorgehäuse 9 umschlossen. Im Innern dieses Motorgehäuses sind auf der Motorwelle 10 in bekannter Weise (nicht dargestellte) Lüfterräder befestigt, welche durch an den beiden Stirnseiten des Gehäuses 9 vorgesehene Eintrittstöffnungen Kühlluft in das Motorinnere einsaugen. Das Eintreten der Kühlluft durch die Eintrittsöffnungen 11 ist in Fig. 1 durch waagrechte Pfeile beidseits des Motorgehäuses 9 angedeutet. Das Motorgehäuse 9 weist weiterhin an beiden Stirnseiten Austrittsöffnungen 12 bzw. 13 für Kühlluft auf. Die in Fig. 1 rechts liegenden Austrittstöffnungen 12 sind halbkreisförmig im oberen Bereich der einen Seite des Motors und die Öffnungen 13 halbkreisförmig im unteren Bereich der gegenüberliegenden Motorseite angeordnet (Fig. 2). Der Verlauf der aus den Öffnungen 12, 13 austretenden, im Motorinneren erwärmten Kühlluft ist in Fig. 1 ebenfalls durch Pfeile angedeutet.

Dieser Verlauf wird durch ein das Motorgehäuse 9 eng anliegend umgebendes Kühlluft-Gehäuse 14 erzwungen. Wie aus der Zeichnung hervorgeht, überdeckt das Kühlluft-Gehäuse 14 bei der dargestellten Ausführungsform das Motorgehäuse an dessen eine (in Fig. 1 rechts gelegenen) Stirnseite derart, daß die Autrittsöffnungen 12 überfangen, die Eintrittsöffnungen 11 jedoch frei liegen. Auf der gegenüberliegenden (in Fig. 1 links gelegenen) Stirnseite des Motorgehäuses 9 überfängt das Gehäuse 14 ringförmig nicht nur die unten liegenden Austrittsöffnungen 13, sondern auch den oberen Bereich des Motorgehäuses 9. Zwische Motorgehäuse 9 und dem Kühlluft-Gehäuse 14 bleibt ein ringförmiger Zwischenraum 15 frei. Das Kühlluft-Gehäuse 14 ist dort, wo es am Motorgehäuse 9 anliegt, gegenüber Luftein- und -austritt abgedichtet. Es besteht vorzugsweise aus Kunststoff und wird über das Motorgehäuse 9 in der aus Fig. 1 ersichtlichen Weise gestülpt. An seiner Unterseite geht das Kühlluft-Gehause 14 in einen Auslaufschacht 16 über, der in einem mit dem Maschinengehäuse 2 verbundenen Auslaufstutzen 17 teleskopierend eingesteckt ist. Hierdurch kann der Motor 4 innerhalb des Maschinengehäuses 2 in Y-Richttung (Fig. 1) zum Zwecke der Regulierung des Riemens 6 eingestellt werden, ohne daß die Verbindung zwischen Schacht 16 und Stutzen 17 getrennt wird. Anstelle des sich konisch nach unten erweiternden Auslaßstutzens 17 kann auch ein entsprechend gestalteter (nicht dargestellter) Faltenbalg eingesetzt werden.

Das Maschinengehäuse 2 ist an seiner unten gelegenen Bodenseite im Bereich des Antriebsmotors 4 durch eine Abdeckplatte 18 verschlossen. Bei der dargestellten Ausführungsform (Fig. 1) ist die Abdeckplatte 18 so ausgebildet, daß sie zusammen mit einem Teil des Bodens 19 des Maschinengehäuses 2 eine Einlaßöffnung 21 für Kühlluft bildet. Diese Einlaßöffnung 21 ist ausschließlich nach unten gerichtet, so daß die Kühlluft nur von unten her in das Maschinengehäuse 2 eintreten kann. Die Abdeckplatte 18 weist weiterhin eine Auslaßöffnung 22 für die abfließende, im Motor 4 erwärmte Kühlluft auf, die vom Auslaßstutzen 17 dicht überfangen ist. Die Auslaßöffnung 22 ist mit schräg angeordneten Luftleitlamellen 23 versehen, so daß die nach untern abfließende Kühlluft in Richtung des Pfeiles X (Fig. 1) abgelenkt wird. Das Maschinengehäuse 2 ist, wie in Fig. 1 angedeutet, durch Fuße 24 auf einer Aufstellfläche 25 abgestützt, so daß die aus der Auslaßöffnung 22 entweichende, durch die Lamellen 23 seitlich umgelenkte Kühlluft zwischen dem Boden der Maschine und der Aufstellfläche 25 entweichen kann.

Auf diese Weise werden die (frische) Kühlluft und die (verbrauchte) Kühlluft ausschließlich von der Unterseite des Maschinengehäuses her zubzw. weggeführt. Sie tritt dabei an keiner Stelle mit der Bedienungsseite der Maschine und dem Schneidgut in Berührung.

Die Gestalt des am Motor 4 anzuordnenden Kühlluft-Gehäuses 14 richtet sich je nach der Anordnung und Gestalt der Eintritts- und Austrittsöffnungen 11 bzw. 12, 13 für die Kühlluft am Motorgehäuse 9. Es ist in jedem Falle möglich, das Kühlluft-Gehäuse 14 so gestalten, daß es einerseits gegenüber der Kühllufteinlaßöffnung am Maschinengehäuse 2 und dem Eintrittsöffnungen 11 für die Kühlluft am Motorgehäuse 9 abgedichtet ist und andererseits eine Strömungsverbindung zwischen den Austrittsöffnungen 12, 13 für die Kühlluft am Motorgehäuse 9 und der Kühlluftauslaßöffnung am Maschinengehäuse 2 herstellt, so daß die vom Motor 4 erwärmte Kühlluft ausschließlich nach unten durch diese Auslaßöffnung 22 abströmt.

Der Abstand zwischen Kühllufteinlaßöffnung 21 und Kühlluftauslaßöffnung 22 am Maschinengehäuse 2 wird so groß gewählt, daß eine Trennung zwischen zu- und abgeführter Kühlluft gewährleistet ist.

Die beschriebene Vorrichtung kann sowohl bei Aufschnitt-Schneidemaschinen mit in senkrechter Ebene umlaufenden Kreismesser 3 als auch bei solchen Maschinen mit in Schräglage rotierendem Messer eingesetzt werden.

**Patentansprüche**

1. Vorrichtung zur Kühlung des elektrischen Antriebsmotors für das Kreismesser (3) einer Aufschnitt-Schneidemaschine mit einem den Motor (4) aufnehmenden Maschinengehäuse (2, 5, 18) wobei die drehenden Teile des Motors durch ein Motorgehäuse abgedeckt sind, welches Ein- und Austrittsöffnungen (11, 12, 13) für Kühlluft aufweist, dadurch gekennzeichnet, daß das Maschinengehäuse (2, 5, 18) den Motor (4) vollständig umschließt und ledliglich an seiner Unterseite Ein- und Auslaßöffnungen (21, 22) für Kühlluft aufweist, und daß zumindest um einen Teil des Motorgehäuses (9) herum ein dessen Kühlluftaustrittsöffnungen (12, 13) überfangendes, dessen Kühllufteintrittsöffnungen (11) jedoch frei lassendes, schalenförmiges Kühlluftgehäuse (14) angeordnet ist, wobei zwischen dem Motorgehäuse und dem Kühlluftgehäuse ein Zwischenraum für die Kühlluft frei bleibt, der einerseits gegenüber der Kühllufteinlaßöffnung (21) am Maschinengehäuse und den Eintrittsöffnungen (11) für Kühlluft am Motorgehäuse (9) abgedichtet ist, und andererseits eine Strömungsverbindung zwischen den Austrittsöffnungen (12, 13) für Kühlluft am Motorgehäuse (9) und der Kühlluftauslaßöffnung (22) am Maschinengehäuse herstellt, so daß die vom Motor erwärmte Kühlluft ausschließlich nach unten durch die Auslaßöffnung (22) des Maschinengehäuses (2) abströmt, und daß das Kühlluftgehäuse so angeordnet ist, daß die Erwärmung des Kreismessers durch die Oberfläche des Maschinengehäuses vermieden wird.

2. Vorrichtung nach Anspruch 1, dadurch gekennzeichnet, daß das Kühlluftgehäuse (14) in einen nach unten gerichteten Auslaufschacht (16) übergeht, der teleskopierend mit einem am Maschinengehäuse (2, 18) angeordneten Kühlluft-Auslaßstutzen (17) verbunden ist.

3. Vorrichtung nach Anspruch 1, dadurch gekennzeichnet, daß zwischen Kühlluftgehäuse (14) und Kühlluftauslaßöffnung (22) des Maschinengehäuses (2) ein Faltenbalg angeordnet ist.

4. Vorrichtung nach Anspruch 1, 2 oder 3, dadurch gekennzeichnet, daß Kühlluftein- und -auslaßöffnung (21, 22) des Maschinengehäuses (2) an einer einen Teil des Bodens dieses Gehäuses bildenden Abdeckplatte (18) angeordnet sind.

5. Vorrichtung nach einem der Ansprüche 1 bis 4, dadurch gekennzeichnet, daß im Bereich der Kühlluftauslaßöffnung (22) Lamellen (23) angeordnet sind, welche die nach unten aus dem Maschinengehäuse (2) austretende Kühlluft schräg zur Seite umlenken.

**Revendications**

1. Dispositif de refroidissement pour le moteur électrique d'entraînement de la lame circulaire (3) d'une machine à trancher, servant à débiter en particulier des produits alimentaires en tranches et comprenant un carter de machine (2, 5, 18) qui renferme le moteur (4), les parties tournantes du moteur étant protégées par un carter de moteur qui présente des ouvertures d'entrée et de sortie (11, 12, 13) pour l'aire de refroidissement, caractérisé en ce que le carter (2, 5, 18) de la machine entoure entièrement le moteur (4) et ne présente des ouvertures d'entrée et de sortie d'air de refroidissement (21, 22) que sur son côté inférieur et en ce qu'au moins autour d'une partie du carter (9) du moteur, est agencé un carter d'air de refroidissement (14) en forme de coquille qui recouvre les ouvertures de sortie d'air de refroidissement (12, 13) du carter (9) du moteur, mais laisse ses ouvertures d'entrée d'air (11) libres, avec préservation, entre le carter du moteur et le carter d'air de refroidissement, d'un espace intermédiaire pour l'air de refroidissement, espace qui, d'une part, est fermé étranche vis-à-vis de l'ouverture (21) d'admission d'air de refroidissement sur le carter de la machine et des ouvertures d'entrée (11) pour l'air de refroidissement sur le carter (9) du moteur et, d'autre part, établit une communication entre les ouvertures de sortie (12, 13) pour l'air de refroidissement sur le carter (9) du moteur et l'ouverture (22) de sortie d'air de refroidissement sur le carter de la machine, de sorte que l'air de refroidissement échauffé par le moteur s'écoule exclusivement ves le base, à travers l'ouverture de sortie (22) du carter (2) de la machine et que le carter d'air de refroidissement est agencé de manière que l'échauffement de la lame circulaire par la surface du carter de la machine soit évité.

2. Dispositif selon la revendication 1, caractérisé en ce que le carter d'air de refroidissement (14) se termine par un puits d'évacuation (16) dirigé vers le bas et qui est relié télescopiquement à une tubulure de sortie d'air de refroidissement (17) prévue sur le carter (2, 18) de la machine.

3. Dispositif selon la revendication 1, caractérisé en ce qu'un soufflet est interposé entre le carter d'air de refroidissement (14) et l'ouverture de sortie d'air de refroidissement (22) du carter (2) de la machine.

4. Dispositif selon l'une quelconque des revendications 1, 2 et 3, caractérisé en ce que les ouvertures d'entrée d'air de refroidissement (21) et de sortie d'air de refroidissement (22) prévues dans le carter (2) de la machine sont aménagées sur une plaque de protection (18) qui forme une partie du fond de ce carter.

5. Dispositif selon l'une quelconque des revendications 1 à 4, caractérisé en ce que, dans la région de l'ouverture de sortie d'air de refroidissement (22), sont disposées des ailettes (23) qui devient obliquement vers le côte l'air de refroidissement qui sort de haut en bas du carter (2) de la machine.

**Claims**

1. An apparatus for cooling the electric drive motor for the circular knife (3) of a slicing machine with a machine housing (2, 5, 18) receiving the motor (4), the rotating parts of the motor being covered by a motor housing which has entry and discharge openings (11, 12, 13) for cooling air, characterized in that the machine housing (2, 5, 18) completely surrounds the motor (4) and comprises inlet and outlet openings (21, 22) for cooling air only on its underside, and a shell-shaped cooling-air housing (14), which covers the cooling-air discharge openings (12, 13) of the motor housing (9) but which opens the cooling-air entry openings (11) of the said motor housing, is arranged at least around part of said motor housing, there remaining between the motor housing and the cooling-air housing an interspace for the cooling air which on the one hand is closed off from the cooling-air inlet opening (21) on the machine housing and the entry openings (11) for cooling air on the motor housing (9) and on the other hand forms a flow connexion between the discharge openings (12, 13) for cooling air on the motor housing (9) and the cooling-air outlet opening (22) on the machine housing, so that the cooling air heated by the motor escapes exclusively downwards through the outlet opening (22) of the machine housing (2), and the cooling-air housing is arranged in such a way that the circular knife is prevented from being heated by the surface of the machine housing.

2. An apparatus according to Claim 1, characterized in that the cooling air housing (14) passes into a discharge shaft (16) which is directed downwards and which is connected in a telescoping manner to a cooling air outlet connexion (17) disposed on the machine housing (2, 18).

3. An apparatus according to Claim 1, characterized in that a folding bellows is disposed between the cooling air housing (14) and the cooling air outlet opening (22) of the machine housing (2).

4. An apparatus according to Claim 1, 2 or 3, characterized in that the cooling air inlet and outlet openings (21, 22) of the machine housing (2) are disposed on a cover plate (18) forming part of the base of the said housing.

5. An apparatus according to any one of Claims 1 to 4, characterized in that plates (23), which deflect the cooling air discharged downwards from the machine housing (2) obliquely to the side, are disposed in the region of the cooling air outlet opening (22).

# Fig. 1

# Fig. 2